# EUROPEAN PATENT APPLICATION

(11) **EP 4 250 384 A1**
(43) Date of publication of application: **27.09.2023**
(21) Application number: 22207864.4
(22) Date of filing: 16.11.2022
(51) Int. Cl.: H01M 4/02, H01M 4/131, H01M 4/36, H01M 4/505, H01M 4/525, H01M 4/587, H01M 4/62, H01M 10/052, H01M 10/0562

(54) **POSITIVE ELECTRODE FOR ALL-SOLID-STATE BATTERY, METHOD OF PREPARING THE SAME, AND ALL-SOLID-STATE BATTERY**

(30) Priority: 24.03.2022 KR 20220036820
(71) Applicant: Samsung SDI Co., Ltd., Yongin-si, Gyeonggi-do 17084 (KR)
(72) Inventor: YUN, Pilsang, 17084 Yongin-si (KR); KIM, Hyunbeom, 17084 Yongin-si (KR); KIM, Do-Yu, 17084 Yongin-si (KR); YOU, Yongchan, 17084 Yongin-si (KR)
(74) Representative: Marks & Clerk LLP

(57) **Abstract**

Provided are a positive electrode for an all-solid-state battery, a method of preparing the same, and an all-solid-state battery including the same, the positive electrode for an all-solid-state battery includes a positive electrode active material including a first positive electrode active material including a lithium nickel-based composite oxide and being in a form of secondary particles in which a plurality of primary particles are aggregated and at least a portion of the primary particles are radially arranged, and a second positive electrode active material including a lithium nickel-based composite oxide and being in a form of single particles; a solid electrolyte; a conductive agent; and a binder.

## Description

### BACKGROUND OF THE INVENTION

### (a) Field of the Invention

A positive electrode for an all-solid-state battery, a method of preparing the same, and an all-solid-state battery including the same are disclosed.

### (b) Description of the Related Art

A portable information device such as a cell phone, a laptop, a smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

An all-solid-state battery among rechargeable lithium batteries refers to a battery in which all materials are solid, and in particular, a battery using a solid electrolyte. This all-solid-state battery is safe with no risk of explosion due to leakage of the electrolyte and also easily prepared into a thin battery.

Recently, various positive electrode active materials that may be applied to this all-solid-state battery are being studied. Lithium nickel oxide, lithium nickel manganese cobalt composite oxide, lithium nickel cobalt aluminium composite oxide, lithium cobalt oxide, and the like, which have been conventionally used, are mainly being studied but have a limit in realizing satisfactory performance of the all-solid-state battery. Accordingly, developments of a new positive electrode active material and new positive electrode composition are required to realize an all-solid-state battery securing long-term cycle-life characteristics as well as realizing high capacity and a high energy density.

### SUMMARY OF THE INVENTION

In the preparation of an all-solid-state battery, pressure transfer is facilitated to minimize a space between the particle components in the positive electrode, and a solid electrolyte can effectively penetrate between the positive electrode active materials, thereby improving a contact property between the solid electrolyte and the positive electrode active material and providing a positive electrode with improved connectivity between electrolytes, in addition, providing a positive electrode in which a volume change of the positive electrode active material due to repeated charging and discharging is minimized, and a phenomenon of separation of the positive electrode active material and the solid electrolyte is suppressed, and providing an all-solid-state battery having high energy density, high capacity, high efficiency, and excellent cycle-life characteristics.

In an embodiment, a positive electrode for an all-solid-state battery includes a positive electrode active material including a first positive electrode active material including a lithium nickel-based composite oxide and being in a form of secondary particles in which a plurality of primary particles are aggregated and at least a portion of the primary particles are radially arranged, and a second positive electrode active material including a lithium nickel-based composite oxide and being in a form of single particles; a solid electrolyte; a conductive agent; and a binder.

In another embodiment, a method of preparing a positive electrode for an all-solid-state battery includes mixing a first positive electrode active material precursor being in a form of secondary particles in which a plurality of primary particles are aggregated and including a nickel-based composite hydroxide, a second positive electrode active material being in a form of single particles and including a lithium nickel-based composite oxide, and a lithium raw material and performing heat-treatment to prepare a positive electrode active material; mixing the obtained positive electrode active material, a solid electrolyte, a conductive agent, and a binder to prepare a positive electrode active material composition; and applying the positive electrode active material composition on a positive electrode current collector and drying the same.

Another embodiment provides an all-solid-state battery including the aforementioned positive electrode, a negative electrode, and a solid electrolyte layer between the positive electrode and the negative electrode.

At least some of the above and other features of the invention are set out in the claims.

The all-solid-state battery is prepared by applying pressure after the electrode assembly is prepared. When the positive electrode according to an embodiment is applied, pressure transfer is facilitated to minimize a space between the particle components in the positive electrode, and a solid electrolyte may effectively penetrate between the positive electrode active materials, thereby improving a contact property between the solid electrolyte and the positive electrode active material and improving connectivity between the solid electrolyte. In addition, in the positive electrode according to an embodiment, the volume change of the positive electrode active material due to repetition of charging and discharging is minimized, so that a separation of the positive electrode active material and the solid electrolyte is suppressed. An all-solid-state battery to which such a positive electrode is applied has high energy density, high capacity, and high efficiency, and may exhibit excellent cycle-life characteristics.

### BRIEF DESCRIPTION OF THE DRAWINGS

FIG. 1 is a schematic view showing the shape of plate-shaped primary particles of a first positive electrode active material.
FIG. 2 is a view for explaining the definition of a radial arrangement in secondary particles of a first positive electrode active material.
FIG. 3 is a schematic view showing a cross-sectional structure of a secondary particle of a first positive electrode active material.
FIGS. 4 and 5 are schematic cross-sectional views illustrating an all-solid-state battery according to an embodiment.
FIG. 6 is a graph showing the initial volume capacity of the all-solid-state battery cells of the Example and Comparative Examples 1 to 3.
FIG. 7 is a graph showing the initial charge/discharge capacity and the pellet density of each positive electrode active material for the all-solid-state battery cells of the Example and Comparative Examples 1 to 3;
FIG. 8 is a graph showing dQ/dV values according to voltages during initial charging and discharging of the all-solid-state battery cells of the Example and Comparative Example 1.
FIG. 9 is a graph showing changes in capacity during initial charging and discharging of the all-solid-state battery cells of the Example and Comparative Example 1.
FIG. 10 is a graph showing cycle-life characteristics of the all-solid-state battery cells of the Example and Comparative Examples 1 and 2.

### DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

As used herein, "combination thereof" means a mixture, laminate, composite, copolymer, alloy, blend, reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter and average size may be measured by a method well known to those skilled in the art, for example, may be measured by a particle size analyzer, or may be measured by a transmission electron micrograph or a scanning electron micrograph. Alternatively, it is possible to obtain an average particle diameter value by measuring the size using a dynamic light scattering method, performing data analysis, counting the number of particles for each particle size range, and calculating from this. The average particle diameter may be measured by a microscopic image or a particle size analyzer, and may mean a diameter (D50) of particles having a cumulative volume of 50 volume% in a particle size distribution.

Here, "or" is not to be construed as an exclusive meaning, for example, "A or B" is construed to include A, B, A+B, and the like.

### Positive Electrode

In an embodiment, a positive electrode for an all-solid-state battery includes a positive electrode active material; a solid electrolyte; a conductive agent; and a binder. Specifically, the positive electrode for an all-solid-state battery may include a current collector and a positive electrode active material layer on the current collector, wherein the positive electrode active material layer includes a positive electrode active material to be described later; a solid electrolyte; a conductive agent; and a binder.

The positive electrode for the all-solid-state battery may include, for example, about 55 wt% to about 99.7 wt% of a positive electrode active material; about 0.1 wt% to about 35 wt% of a solid electrolyte; about 0.1 wt% to about 5 wt% of a conductive agent; and about 0.1 wt% to about 5 wt% of a binder based on the total weight of the aforementioned components. For example, the positive electrode for the all-solid-state battery may include about 74 wt% to about 89.8 wt% of a positive electrode active material; about 10 wt% to about 20 wt% of a solid electrolyte; about 0.1 wt% to about 3 wt% of a conductive agent; and about 0.1 wt% to about 3 wt% of a binder. When each component is included in such content ranges, the positive electrode for the all-solid-state battery may improve cycle-life characteristics while maximizing capacity, and further improve energy density, and initial charge/discharge efficiency.

### Positive Electrode Active Material

A positive electrode active material according to an embodiment includes a first positive electrode active material and a second positive electrode active material. The first positive electrode active material includes a lithium nickel-based composite oxide and is in the form of secondary particles in which a plurality of primary particles are aggregated and at least a portion of the primary particles are radially arranged. The second positive electrode active material includes a lithium nickel-based composite oxide and is in a form of single particles.

### First Positive Electrode Active Material

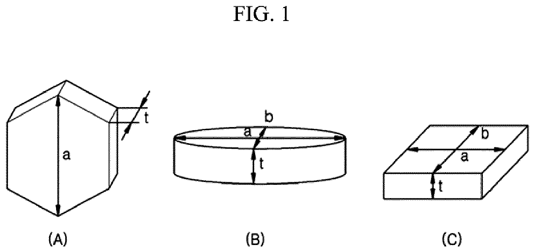

In the first positive electrode active material, the secondary particles may include plate-shaped primary particles. FIG. 1 is a schematic view showing the plate-shaped primary particles. Referring to FIG. 1, the primary particles according to an embodiment have various detailed shapes while having a basic plate structure, for example, (A) a polygonal nanoplate shape such as a hexagon, (B) a nanodisk shape, and (C) a rectangular parallelepiped shape.

In FIG. 1, "a" means a length of a long axis of the primary particle, "b" means a length of a short axis, and "t" means a thickness. Here, the length (a) of the long axis means a maximum length with respect to the widest surface of the primary particle. The thickness (t) may be a maximum length of a surface that is approximately perpendicular to the widest surface of the primary particle. A direction containing the length (a) of the long axis and the length (b) of the short axis is defined as a plane direction, and a direction in which the thickness (t) is defined is defined as a thickness direction.

The thickness (t) of the primary particles may be smaller than the length (a) of the long axis and the length (b) of the short axis, which are lengths in the plane direction. The length (a) of the long axis among the lengths in the plane direction may be longer or the same as the length (b) of the short axis.

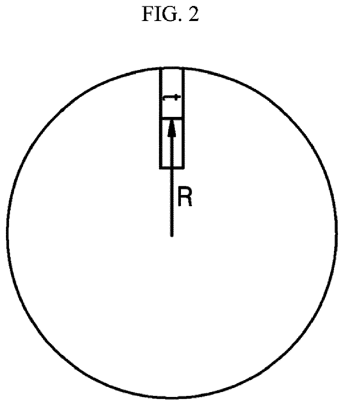

In the first positive electrode active material, at least a portion of the primary particles are radially arranged, and for example, long axes of the primary particles may be arranged in a radial direction. FIG. 2 is a view for explaining the definition of a radial arrangement in a secondary particle according to an embodiment. In an embodiment, the radially arranged structure means that, as shown in FIG. 2, the thickness (t) direction of the primary particles is perpendicular to or within an angle of about ±5° of perpendicular to the direction (R) from the secondary particle from the center of the secondary particle to the surface.

In this way, when at least a portion of the primary particles are radially arranged, since the secondary particles have lots of crystal planes, which transmit lithium to the outside, exposed onto the surface and pores, which serve as a lithium diffusion passage, also exposed onto the surface, lithium diffusion may be improved, securing high initial efficiency and high capacity. In addition, the pores exposed to the surface of the secondary particles are directed toward a center of the secondary particles, which further promotes the lithium diffusion.

Due to the radially arranged primary particles, uniform contraction and expansion of the positive electrode active material are possible when lithium is deintercalated and/or intercalated, and when lithium is deintercalated, more pores exist in the (001) direction, which is the direction in which the particles expand, so that they act as a buffer. Accordingly, probability of cracks occurring during contraction and expansion of the positive electrode active material is lowered, and internal pores further mitigate volume change, thereby reducing cracks generated between primary particles during charging and discharging. Accordingly, cycle-life characteristics of the rechargeable all-solid-state lithium battery may be improved and an increase in resistance may be reduced.

An average length of the primary particles of the secondary particle may be about 0.01 µm to about 5 µm, for example, about 0.01 µm to about 2 µm, about 0.01 µm to about 1 µm, about 0.02 µm to about 1 µm, about 0.05 µm to about 0.5 µm, or about 150 nm to about 500 nm. Here, average length means the average length of the long axis length (a) in the plane direction when the primary particles are plate-shaped, and when the primary particle is spherical, it means the average particle diameter.

When the primary particles are plate-shaped, an average thickness of the primary particles may be, for example, greater than or equal to about 50 nm, greater than or equal to about 100 nm, greater than or equal to about 200 nm, greater than or equal to about 300 nm, greater than or equal to about 400 nm, greater than or equal to about 500 nm, greater than or equal to about 600 nm, greater than or equal to about 700 nm, greater than or equal to about 800 nm, or greater than or equal to about 900 nm, and, for example, less than or equal to about 5 µm, less than or equal to about 4 µm, less than or equal to about 3 µm, less than or equal to about 2 µm, less than or equal to about 1 µm, less than or equal to about 900 nm, less than or equal to about 800 nm, less than or equal to about 700 nm, less than or equal to about 600 nm, or less than or equal to about 500 nm, for example, about 100 nm to about 200 nm.

In addition, in the primary particle, a ratio of the average thickness to the average length may be about 1:1 to about 1:10, for example, about 1:1 to about 1:8, about 1:1 to about 1:6, or about 1:2 to about 1:5.

Here, the length and thickness may be measured with an optical microscope such as a scanning electron microscope, the average length may mean an arithmetic mean value of about 50 pieces of length data, and the average thickness may be an arithmetic mean value of about 50 pieces of thickness data.

As described above, when the ranges of the average length and average thickness of the primary particles are satisfied, the first positive electrode active material may easily transfer lithium to increase charging and discharging efficiency, may minimize a stress of volume change due to charging and discharging to secure structural stability, and may suppress a separation between the positive electrode active material and the solid electrolyte to improve the long cycle-life.

In the first positive electrode active material, the secondary particles may include an inner portion and an outer portion surrounding the inner portion. The inner portion may be referred to as a center or core, and the outer portion may be referred to as an external portion or a shell.

For example, the secondary particles may include an inner portion having an irregular porous structure and an outer portion in which at least a portion of the primary particles are radially arranged, that is, a radially arranged structure. The irregular porous structure is a structure having the primary particles and pores wherein a size, a shape, a position, and the like of the primary particles are irregular. In this inner portion, the primary particles may be arranged without regularity unlike the outer portion.

In this structure, the "inner portion" may be defined as a portion having an irregular porous structure, or a portion in which primary particles and pores are irregularly arranged, and the "outer portion" is a portion surrounding the inner portion, and may be defined as a portion having a radial structure or a portion in which at least a portion of the primary particles are radially arranged.

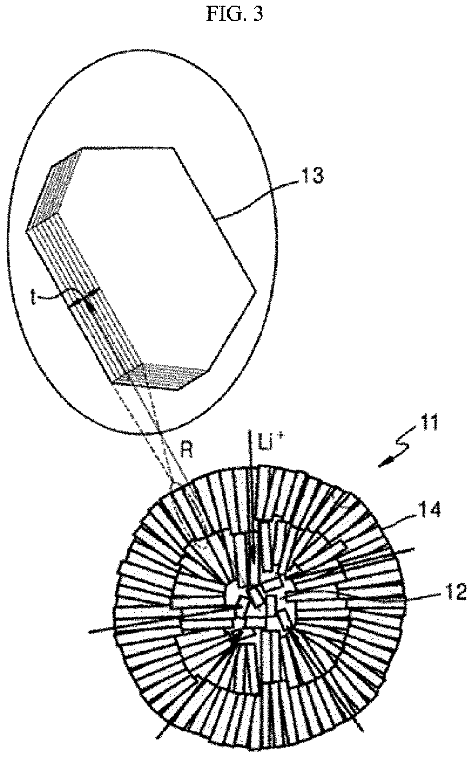

FIG. 3 is a schematic view showing a cross-sectional structure of the secondary particle of the first positive electrode active material. Referring to FIG. 3, the secondary particles 11 of the first positive electrode active material have an outer portion 14 having a structure in which the plate-shaped primary particles 13 are arranged in a radial direction, and an inner portion 12 in which the primary particles 13 are irregularly arranged. In the inner portion 12, there may be more empty spaces between the primary particles than the outer portion. In addition, the pore size and porosity in the inner portion are large and irregular compared with the pore size and porosity in the outer portion. In FIG. 3, arrows indicate the movement direction of lithium ions.

The first positive electrode active material with this structure has a porous structure in the inner portion, so that a diffusion distance of lithium ions to the inner portion is reduced, and the pores may have an effect of alleviating volume changes between the primary particles occurring during the charge and discharge. In addition, in the first positive electrode active material, the primary particles in the outer portion are radially arranged, so lithium ions may be easily intercalated into the surface, and a stress according to the volume changes may be minimized during the charge and discharge. Such a positive electrode active material may improve the charging/discharging efficiency of the all-solid-state battery and improve a contact property between the positive electrode active material and the solid electrolyte, thereby reducing the resistance of the all-solid-state battery and improving cycle-life characteristics.

In the secondary particles of the first positive electrode active material, the inner portion may include pores with a larger size than those of the outer portion. For example, the pores in the inner portion may have a size of about 150 nm to about 1 µm, and the pores in the outer portion may have a size of less than about 150 nm. Here, in the outer portion, lithium ions may be easily intercalated, while in the inner portion, a lithium diffusion distance may be short, and there is an effect of alleviating the volume changes of the positive electrode active material during the charge and discharge. Here, the pores may have a size which is a diameter, when spherical or circular, and a length of a long axis when oval and the like, wherein the size is measured with an electron microscope such as SEM and the like.

In addition, the secondary particles of the first positive electrode active material may have open pores on the surface. The open pores may be pores of which a portion of walls are not closed, and the open pores on the surface may be connected to the outside and work as a passage through which a material comes in and out. These open pores may have a size of less than about 150 nm, for example, about 10 nm to about 148 nm. Since the primary particles in the outer portion of the secondary particles are radially arranged, the open pores on the surface may be in the form of facing a center from the surface of the secondary particles. The open pores may be formed to a depth of less than or equal to about 150 nm, for example, about 0.1 nm to about 100 nm, for example, about 1 nm to about 50 nm from the surface of the secondary particle. The size and depth of the open pores may be measured by the BJH (Barrett, Joyner and Halenda) method, which is a method derived through the adsorption or desorption content (e.g., amount) of nitrogen.

The closed pores may exist in the inner portion of the secondary particle, and closed pores and/or open pores may exist in the outer portion. The closed pores may exclude or mostly exclude an electrolyte, while the open pores may include an electrolyte therein. The closed pores may be referred to as independent pores that are not connected to other pores since all of the walls of the pores are formed in a closed structure.

In the first positive electrode active material, a radius ratio of the inner portion to a total of the secondary particles may be about 45% to about 65%, for example, about 45% to about 60%, about 50% to about 60%, or about 50% to about 55%. Considering this, the inner portion is defined as a region from the center to about 45 length% to about 65 length% of the total distance from the center of the secondary particle to the surface, narrowly to a region from about 50 length% to 55 length% from the center, and the outer portion may be also defined as a region surrounding this inner portion.

In addition, a volume ratio of the outer portion to the total of the secondary particles may be less than or equal to about 87%, for example, less than or equal to about 85%, about 80% to about 87%, or about 80% to about 85%. When the volume ratio of the outer portion of the secondary particles satisfies the ranges, initial charge/discharge efficiency and high-temperature cycle-life characteristics may be further improved. Considering this, the outer portion may be defined as a region surrounding the inner portion and a region satisfying about 87 volume% or less of the total volume of the secondary particles.

Meanwhile, the first positive electrode active material may have a multi-center radial array structure having a plurality of centers, or a single-center radial array structure arranged toward one center.

The average particle diameter of the first positive electrode active material may be about 5 µm to about 20 µm, for example, about 8 µm to about 20 µm, or about 10 µm to about 18 µm. In this case, the capacity of the positive electrode active material for the all-solid-state battery may be increased, and pellet density and energy density may be further increased. Here, the average particle diameter (D50) is measured by a particle size analyzer using a laser diffraction method, and refers to a diameter of particles having a cumulative volume of 50 volume% in the particle size distribution.

The first positive electrode active material may include a zirconium-containing coating layer on the surface of the secondary particles. The zirconium-containing coating layer may function as a type of buffer layer. That is, the zirconium-containing coating layer may serve to improve cycle-life characteristics of the all-solid-state battery by lowering the reactivity between the first positive electrode active material and the solid electrolyte and thus reducing an interfacial resistance.

The zirconium-containing coating layer may include, for example, zirconium oxide, zirconium alkoxide, zirconium hydroxide, zirconium carbonate, lithium zirconium oxide, or a combination thereof. The coating layer may be disposed on the whole or portion of the surface of the secondary particle. That is, the coating layer may be in the form of a film or an island. A content of zirconium in the coating layer may be about 0.01 mol% to about 3.0 mol%, for example, about 0.01 mol% to about 2.0 mol%, about 0.01 mol% to about 1.0 mol%, about 0.05 mol% to about 0.8 mol%, or about 0.1 mol% to about 0.5 mol% based on 100 mol% of the first positive electrode active material. When the first positive electrode active material includes the zirconium-containing coating layer, a reaction between the positive electrode active material and the solid electrolyte may be suppressed, an interfacial resistance may be reduced, and high-voltage stability, initial efficiency, and cycle-life characteristics of the all-solid-state battery may be improved.

### Second Positive Electrode Active Material

A second positive electrode active material is in the form of a single particle, exists alone without a grain boundary within the particle, is composed of one particle, and has a monolith structure or a one-body structure, in which particles are not aggregated with each other but exist as an independent phase in terms of morphology, or a non-aggregated particle, and may be expressed as a single particle (one-body particle, single grain), for example, as a monocrystal (single crystal).

The shape of the second positive electrode active material may be, for example, a polyhedral, amorphous, spherical, or a shape close to a spherical shape.

A positive electrode for an all-solid-state battery according to an embodiment includes the second positive electrode active material in the form of a single particle and thus may increase pellet density and energy density. In addition, an all-solid-state battery is manufactured by applying a pressure to an electrode assembly, wherein when the second positive electrode active material, which is a single particle and has a spherical shape, is mixed with the first positive electrode active material, the pressure may be very easily transferred and thus minimize an empty space among particle components in the positive electrode, so that a solid electrolyte may be effectively penetrated into the positive electrode active material, thereby, improving connectivity of the solid electrolytes and a contact between the solid electrolyte and the positive electrode active material. An all-solid-state battery to which the positive electrode is applied may realize high-capacity and high efficiency as well as high energy density and exhibit excellent cycle-life characteristics. On the contrary, when the second positive electrode active material is not mixed, or is replaced with another second positive electrode active material in the form of a secondary particle rather than the single particle and with a smaller particle diameter than that of the first positive electrode active material, there may not only be a smaller effect of improving pellet density and energy density but also the pressure may not be easily transferred due to the shape during the process of preparing the all-solid-state battery, deteriorating the penetration of the solid electrolyte and also deteriorating the connectivity of the solid electrolytes and the contact between the solid electrolyte and the positive electrode active material.

An average particle diameter (D50) of the second positive electrode active material may be about 0.05 µm to about 8 µm. For example, the average particle diameter (D50) may be about 0.1 µm to about 7 µm, about 0.1 µm to about 6 µm, about 0.1 µm to about 5 µm, or about 1 µm to about 4 µm. In this case, the pellet density and energy density of the positive electrode active material may be further increased, and penetration and connectivity of the solid electrolyte in the positive electrode may be improved, thereby improving efficiency and cycle-life characteristics of the all-solid-state battery. Here, the average particle diameter (D50) is measured by a particle size analyzer and refers to a diameter of particles having a cumulative volume of 50 volume% in the particle size distribution.

The second positive electrode active material may include a zirconium-containing coating layer on the surface of the single particle. The zirconium-containing coating layer may function as a type of buffer layer. For example, the zirconium-containing coating layer suppresses a reaction between the second positive electrode active material and the solid electrolyte and lowers an interfacial resistance, thereby contributing to improving cycle-life characteristics of an all-solid-state battery.

The coating layer may include, for example, zirconium oxide, zirconium alkoxide, zirconium hydroxide, zirconium carbonate, lithium zirconium oxide, or a combination thereof. The coating layer may be disposed on the whole or portion of the surface of the single particle. That is, the coating layer may be in the form of a film or an island. A content of zirconium in the coating layer may be about 0.01 mol% to about 3.0 mol%, for example, about 0.01 mol% to about 2.0 mol%, about 0.01 mol% to about 1.0 mol%, about 0.05 mol% to about 0.8 mol%, or about 0.1 mol% to about 0.5 mol% based on 100 mol% of the second positive electrode active material. When the second positive electrode active material includes the zirconium-containing coating layer, an interfacial resistance between the positive electrode active material and the solid electrolyte may be reduced and high-voltage stability, initial efficiency, and cycle-life characteristics of the all-solid-state battery may be improved.

The positive electrode active material may include about 50 wt% to about 90 wt% of the first positive electrode active material, and about 10 wt% to about 50 wt% of the second positive electrode active material, and for example about 60 wt% to about 90 wt% of the first positive electrode active material and about 10 wt% to about 40 wt% of the second positive electrode active material. When the first positive electrode active material and the second positive electrode active material are mixed in such a ratio, a pellet density and energy density may be maximized, and a solid electrolyte penetration may be improved, thereby improving charging and discharging efficiency and cycle-life characteristics of the all-solid-state battery.

The first positive electrode active material and the second positive electrode active material are each a positive electrode active material including a lithium nickel-based composite oxide, and the lithium nickel-based composite oxide of the first positive electrode active material and the lithium nickel-based composite oxide of the second positive electrode active material may be the same or different from each other.

The nickel content in the lithium nickel-based composite oxide may be greater than or equal to about 30 mol%, for example greater than or equal to about 40 mol%, greater than or equal to about 50 mol%, greater than or equal to about 60 mol%, greater than or equal to about 70 mol%, greater than or equal to about 80 mol%, or greater than or equal to about 90 mol% and less than or equal to about 99.9 mol%, or less than or equal to about 99 mol% based on the total amount of metals other than lithium. For example, the nickel content in the lithium nickel-based composite oxide may be higher than the content of each of other metals such as cobalt, manganese, and aluminium. When the nickel content satisfies the above range, the positive electrode active material may exhibit excellent battery performance while realizing a high capacity.

The lithium nickel-based composite oxide may be represented by Chemical Formula 1.

[Chemical Formula 1] Liₐ₁Niₓ₁M¹_{y1}M²_{1-x1-y1}O_{2-z}X_{z}

In Chemical Formula 1, 0.9≤a1≤1.8, 0.3≤x1≤1, 0≤y1≤0.7, and 0≤z≤0.1, M¹ and M² are independently at least one element selected from Al, B, Ba, Ca, Ce, Co, Cr, Fe, Mg, Mn, Mo, Nb, Si, Sr, Ti, V, W, and Zr, and X is at least one element selected from F, P, and S.

In Chemical Formula 1, for example, 0.4≤x1≤1 and 0≤y1≤0.6, 0.5≤x1≤1 and 0≤y1≤0.5, 0.6≤x1≤1 and 0≤y1≤0.4, or 0.7≤x1≤1 and 0≤y1≤0.3, 0.8≤x1≤1 and 0≤y1≤0.2, or 0.9≤x1≤1 and 0≤y1≤0.1.

The lithium nickel-based composite oxide may be, for example, represented by Chemical Formula 2.

[Chemical Formula 2] Liₐ₂Niₓ₂Co_{y2}M³_{1-x2-y2}O_{2-z}X_{z}

In Chemical Formula 2, 0.9≤a2≤1.8, 0.3≤x2<1, 0<y2≤0.7, and 0≤z≤0.1, M³ is at least one element selected from Al, B, Ba, Ca, Ce, Cr, Fe, Mg, Mn, Mo, Nb, Si, Sr, Ti, V, W, and Zr, and X is at least one element selected from F, P, and S.

In Chemical Formula 2, for example, 0.3≤x2≤0.99 and 0.01≤y2≤0.7, 0.4≤x2≤0.99 and 0.01≤y2≤0.6, 0.5≤x2≤0.99 and 0.01≤y2≤0.5, or 0.6≤x2≤0.99 and 0.01≤y2≤0.4, 0.7≤x2≤0.99 and 0.01≤y2≤0.3, 0.8≤x2≤0.99 and 0.01≤y2≤0.2, or 0.9≤x2≤0.99 and 0.01≤y2≤0.1.

The lithium nickel-based composite oxide may be, for example, represented by Chemical Formula 3.

[Chemical Formula 3] Liₐ₃Niₓ₃Co_{y3}M⁴_{z3}M⁵_{1-x3-y3-z3}O_{2-z}X_{z}

In Chemical Formula 3, 0.9≤a3≤1.8, 0.3≤x3≤0.98, 0.01≤y3≤0.69, 0.01≤z3≤0.69, and 0≤z≤0.1, M⁴ is at least one element selected from Al, and Mn, M⁵ is at least one element selected from B, Ba, Ca, Ce, Cr, Fe, Mg, Mo, Nb, Si, Sr, Ti, V, W, and Zr, and X is at least one element selected from F, P, and S.

In Chemical Formula 3, for example, 0.4≤x3≤0.98, 0.01≤y3≤0.59, and 0.01≤z3≤0.59, 0.5≤x3≤0.98, 0.01≤y3≤0.49, and 0.01≤z3≤0.49, or 0.6≤x3≤0.98, 0.01≤y3≤0.39, and 0.01≤z3≤0.39, or 0.7≤x3≤0.98, 0.01≤y3≤0.29, and 0.01≤z3≤0.29, or 0.8≤x3≤0.98, 0.01≤y3≤0.19, and 0.01≤z3≤0.19, or 0.9≤x3≤0.98, 0.01≤y3≤0.09, and 0.01≤z3≤0.09.

### Method of Preparing Positive Electrode Active Material

In an embodiment, a method of preparing a positive electrode active material includes mixing a first positive electrode active material precursor being in a form of secondary particles in which a plurality of primary particles are aggregated and including a nickel-based composite hydroxide, a second positive electrode active material being in a form of single particles and including a lithium nickel-based composite oxide, and a lithium raw material, and performing heat-treatment.

Unlike the conventional method of separately preparing the first positive electrode active material and the second positive electrode active material through each firing step, mixing them, and optionally reheating them, in the method of preparing the positive electrode active material, a first positive electrode active material precursor, a second positive electrode active material, and a lithium raw material are mixed and simultaneously fired. Since the preparing method is simple and efficient, productivity may be improved, a pellet density and energy density of the final positive electrode active material may be increased, and efficiency and cycle-life characteristics of the all-solid-state battery may be improved.

The first positive electrode active material precursor may be prepared by a co-precipitation method. In other words, a nickel raw material and optionally, a metal raw material other than the nickel are mixed to prepare a composite metal raw material, and then, a complexing agent and a pH controlling agent are added thereto to control pH of the mixture and perform a co-precipitation reaction, preparing a nickel-based composite hydroxide having a desired composition.

The complexing agent serves to control a reaction rate of the formation of a precipitate in the co-precipitation reaction, and may be, for example, ammonium hydroxide (NHOH), ammonium sulfate ((NH₄)₂SO₄), or citric acid.

The pH controlling agent may be, for example, sodium hydroxide (NaOH), sodium carbonate (Na₂CO₃), sodium oxalate (Na₂C₂O₄), or the like. The pH of the mixture may be adjusted, for example, in the range of about 10 to about 13.

The co-precipitation reaction may proceed in several steps, for example, 2 steps, 3 steps, or 4 steps. In each step, a concentration of the complexing agent, an input rate of the composite metal raw material, the pH range, a reaction temperature, reaction time, stirring power, and the like may be differently adjusted. Through these adjustments, a secondary particle-type positive electrode active material precursor, in which at least a portion of the primary particles are radially arranged, is prepared, and in addition, secondary particles having different internal and external shapes are prepared.

The nickel-based composite hydroxide that is a first positive electrode active material precursor may be, for example, represented by Chemical Formula 11.

[Chemical Formula 11] Niₓᵢ₁₁M¹¹_{y11}M¹²_{1-x11-y11}(OH)₂

In Chemical Formula 11, 0.3≤x11≤1, 0≤y11≤0.7, and M¹¹ and M¹² are each independently at least one element selected from Al, B, Ba, Ca, Ce, Co, Cr, F, Fe, Mg, Mn, Mo, Nb, P, S, Si, Sr, Ti, V, W, and Zr.

As a specific example, the nickel-based composite hydroxide may be represented by Chemical Formula 12 or Chemical Formula 13.

[Chemical Formula 12] Niₓ₁₂Co_{y12}M¹³_{1-x12-y12}(OH)₂

In Chemical Formula 12, 0.3≤x12<1, 0<y12≤0.7, and M¹³ is at least one element selected from Al, B, Ba, Ca, Ce, Cr, F, Fe, Mg, Mn, Mo, Nb, P, S, Si, Sr, Ti, V, W, and Zr.

[Chemical Formula 13] Niₓ₁₃Co_{y13}M¹⁴_{z13}M¹⁵_{1-x13-y13-z13}(OH)₂

In Chemical Formula 13, 0.3≤x13≤0.98, 0.01≤y13≤0.69, 0.01≤z13≤0.69, M¹⁴ is at least one element selected from Al and Mn, and M¹⁵ is at least one element selected from B, Ba, Ca, Ce, Cr, F, Fe, Mg, Mo, Nb, P, S, Si, Sr, Ti, V, W, and Zr.

An average particle diameter (D50) of the first positive electrode active material precursor may be, for example, about 5 µm to about 20 µm, or about 8 µm to about 18 µm. Here, the average particle diameter (D50) is measured by a particle size analyzer and refers to a diameter of particles having a cumulative volume of 50 volume% in the particle size distribution.

The second positive electrode active material may be a single particle and in the form of an oxide, and may be prepared by mixing a nickel-based composite hydroxide and a lithium raw material, performing heat-treatment, and then performing pulverization. Here, the heat-treatment may be performed, for example, at about 800 °C to about 1000 °C in an oxidizing gas atmosphere for about 5 hours to about 25 hours. The pulverization is performed to obtain a single-particle structure, and is distinct from fracture and may be performed using a device such as a jet mill.

The lithium nickel-based composite oxide of the second positive electrode active material may be the same as described in the positive electrode active material section, and may be represented by Chemical Formula 1, Chemical Formula 2, or Chemical Formula 3. An average particle diameter (D50) of the second positive electrode active material may be about 0.05 µm to about 8 µm, for example, about 0.5 µm to about 5 µm.

A mixing ratio of the first positive electrode active material precursor and the second positive electrode active material may be in a weight ratio of about 5:5 to about 9:1, for example, about 6:4 to about 9:1, about 6:4 to about 8:2, or about 7:3 to about 9:1. In this case, a positive electrode active material having high pellet density and high energy density, high capacity, and excellent cycle-life characteristics may be prepared.

The lithium raw material may be, for example, Li₂CO₃, LiOH, a hydrate thereof, or a combination thereof, and may be mixed in a ratio of about 0.8 mole to about 1.8 mole, or about 0.9 mole to about 1.2 mole with respect to 1 mole of the nickel-based composite hydroxide.

The heat-treatment may be performed, for example, at a temperature of about 650 °C to about 850 °C for about 5 hours to about 25 hours.

The method for preparing the positive electrode active material may further include mixing the first positive electrode active material precursor, the second positive electrode active material, and the lithium raw material, and performing heat-treatment to form a buffer layer in the obtained material and, for example, it may include inputting a zirconium raw material in the obtained material and performing reheat-treatment. Accordingly, a first positive electrode active material including a zirconium coating layer on the surface of secondary particles and a second positive electrode active material including a zirconium coating layer on the surface of single particles may be finally obtained. Through this, the positive electrode active material is suppressed from a reaction with the solid electrolyte and thus may lower interfacial resistance and improve high-voltage stability, initial efficiency, cycle-life characteristics, and the like of an all-solid-state battery.

Here, the zirconium raw material may be zirconium alkoxide, zirconium oxide, zirconium hydroxide, zirconium carbonate, or the like. The zirconium raw material may be added in a zirconium content of about 0.01 mol% to about 3.0 mol% based on about 100 mol% of the final positive electrode active material, for example, about 0.01 mol% to about 2.0 mol%, about 0.01 mol% to about 1.0 mol%, about 0.05 mol% to about 0.8 mol%, or about 0.1 mol% to about 0.5 mol%. The reheat-treatment may be performed at about 200 °C to about 500 °C for about 0.5 hours to about 15 hours, for example, about 300 °C to about 400 °C for about 1 hour to about 10 hours.

When the zirconium raw material is added to the obtained material, the lithium raw material may be added together. Herein, lithium zirconium oxide with a stable structure is formed into a buffer layer on the surface of the positive electrode active material, lowering interfacial resistance and improving performance of an all-solid-state battery.

The buffer layer may be formed in a dry or wet method. The dry method may be performed by adding the zirconium raw material and optionally, the lithium raw material to the obtained material, while heat-treated. The wet method may be performed by adding the obtained material to a solution in which the zirconium raw material and optionally, the lithium raw material is mixed and then, drying and heat-treating the mixture.

### Solid Electrolyte

The solid electrolyte may be an inorganic solid electrolyte such as a sulfide-based solid electrolyte or an oxide-based solid electrolyte, or a solid polymer electrolyte.

In an embodiment, the solid electrolyte may be a sulfide-based solid electrolyte having excellent ion conductivity. The sulfide-based solid electrolyte may be, for example, Li₂S-P₂S₅, Li₂S-P₂S₅-LiX (X is a halogen element, for example I or CI), Li₂S-P₂S₅-Li₂O, Li₂S-P₂S₅-Li₂O-LiI, Li₂S-SiS₂, Li₂S-SiS₂-LiI, Li₂S-SiS2-LiBr, Li₂S-SiS2-LiCl, Li₂S-SiS₂-B₂S3-LiI, Li₂S-SiS₂-P₂S₅-LiI, Li₂S-B₂S₃, Li₂S-P₂S₅-ZₘSₙ (m and n is each an integer and Z is Ge, Zn, or Ga), Li₂S-GeS₂, Li₂S-SiS₂-Li₃PO₄, Li₂S-SiS₂-LiₚMO_{q} (p and q are integers and M is P, Si, Ge, B, Al, Ga, or In), and the like.

The sulfide-based solid electrolyte may be obtained by, for example, mixing Li₂S and P₂S₅ in a mole ratio of about 50:50 to about 90:10 or about 50:50 to about 80:20. Within the above mixing ratio range, a sulfide-based solid electrolyte having excellent ionic conductivity may be prepared. The ionic conductivity may be further improved by adding SiS₂, GeS₂, B₂S₃, and the like as other components thereto. The mixing may be performed by a mechanical milling method or a solution method. The mechanical milling method is to make starting materials into particulates by putting the starting materials, and the like in a ball mill and fervently stirring them. The solution method may be performed by mixing the starting materials in a solvent to obtain a solid electrolyte as a precipitate. In addition, after the mixing, firing may be additionally performed. When the additional firing is performed, the solid electrolyte may have much rigid crystals.

For example, the solid electrolyte may be an argyrodite-type sulfide-based solid electrolyte. The argyrodite-type sulfide-based solid electrolyte may be for example LiₐM_{b}P_{c}S_{d}Aₑ (a, b, c, d, and e are all greater than or equal to about 0 and less than or equal to about 12, M is Ge, Sn, Si, or a combination thereof, and A is F, CI, Br, or I), and as a specific example, Li₇₋ₓPS₆₋ₓAₓ (x is greater than or equal to about 0.2 and less than or equal to about 1.8, and A is F, CI, Br, or I). The argyrodite-type sulfide-based solid electrolyte may be specifically Li₃PS₄, Li₇P₃S₁₁, Li₇PS₆, Li₆PS₅Cl, Li₆PS₅Br, Li_{5.8}PS_{4.8}Cl_{1.2}, Li_{6.2}PS_{5.2}Br_{0.8}, and the like. This sulfide-based solid electrolyte has high ionic conductivity close to about 10⁻⁴ to about 10⁻² S/cm, which is ionic conductivity of a general liquid electrolyte, at room temperature and thus, may form a close interface between the positive electrode active material and the solid electrolyte layer without deteriorating the ion conductivity. Furthermore, a close interface between the electrode layer and the solid electrolyte layer may be formed. In an all-solid-state battery including the same, battery performance such as rate capability, coulombic efficiency, and cycle-life characteristics may be improved.

The sulfide-based solid electrolyte may be amorphous or crystalline, and may be in a mixed state.

The solid electrolyte may be an oxide-based inorganic solid electrolyte in addition to the sulfide-based material. The oxide-based inorganic solid electrolyte may include for example Li₁₊ₓTi₂₋ₓAl(PO₄)₃ (LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃ (PZT), Pb₁₋ₓLaₓZr_{1-y}Ti_{y}O₃ (PLZT) (0≤x<1, 0≤y<1), Pb(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂ based ceramics, Garnet based ceramics Li₃₊ₓLa₃M₂O₁₂ (M= Te, Nb, or Zr and x is an integer of 1 to 10), or a mixture thereof.

The solid electrolyte may be in a form of particles, and the average particle diameter (D50) thereof may be less than or equal to about 5.0 µm, for example, about 0.5 µm to about 5.0 µm. Such a solid electrolyte may effectively penetrate between the positive electrode active materials, and has an excellent contact property with the positive electrode active materials and connectivity between the solid electrolyte particles. The average particle diameter of the solid electrolyte may be measured by a microscope image, and for example, a particle size distribution may be obtained by measuring the particle size in a scanning electron microscope image, and then D50 may be calculated.

A content of the solid electrolyte in the positive electrode for an all-solid-state battery may be about 0.1 wt% to about 35 wt%, for example, about 1 wt% to about 35 wt%, about 5 wt% to about 30 wt%, about 8 wt% to about 25 wt%, or about 10 wt% to about 20 wt%. This is a content based on the total weight of the components in the positive electrode, and specifically, it may be referred to as a content based on the total weight of the positive electrode active material layer. In addition, the positive electrode for an all-solid-state battery may include about 65 wt% to about 99 wt% of the positive electrode active material and about 1 wt% to about 35 wt% of the solid electrolyte, for example, about 80 wt% to about 90 wt% of the positive electrode active material and about 10 wt% to about 20 wt% of the solid electrolyte based on the total weight of the positive electrode active material and the solid electrolyte. When the solid electrolyte is included in the positive electrode in such a content, the efficiency and cycle-life characteristics of the all-solid-state battery may be improved without reducing the capacity.

### Binder

The binder improves binding properties of positive electrode active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The binder may be included in an amount of about 0.1 wt% to about 5 wt%, or about 0.1 wt% to about 3 wt%, based on the total weight of each component of the positive electrode for an all-solid-state battery or based on the total weight of the positive electrode active material layer. In the above content range, the binder may sufficiently exhibit adhesive ability without degrading battery performance.

### Conductive Material

The conductive material is included to provide electrode conductivity and any electrically conductive material may be used as a conductive material unless it causes a chemical change. The conductive material may include, for example, a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminium, silver, and the like; a conductive polymer such as a polyphenylene derivative, and the like; or a mixture thereof.

The conductive material may be included in an amount of about 0.1 wt% to about 5 wt%, or about 0.1 wt% to about 3 wt%, based on the total weight of each component of the positive electrode for an all-solid-state battery or based on the total weight of the positive electrode active material layer. In the above content range, the conductive material may improve electrical conductivity without degrading battery performance.

### Method of Preparing Positive Electrode

An embodiment provides method of preparing a positive electrode for an all-solid-state battery. The method of preparing the positive electrode includes preparing the aforementioned positive electrode active material; mixing the obtained positive electrode active material, a solid electrolyte, a conductive agent, and a binder to prepare a positive electrode active material composition; and applying the positive electrode active material composition to the positive electrode current collector and drying the same.

The preparing of the positive electrode active material is the same as described above.

In the step of preparing the positive electrode active material composition, a mixing ratio of each component may be, as described above, a ratio of about 55 wt% to about 99.7 wt% of the positive electrode active material; about 0.1 wt% to about 35 wt% of the solid electrolyte; about 0.1 wt% to about 5 wt% of the conductive agent; and about 0.1 wt% to about 5 wt% of the binder. As a specific example, about 74 wt% to about 89.8 wt% of the positive electrode active material; about 10 wt% to about 20 wt% of the solid electrolyte; about 0.1 wt% to about 3 wt% of a conductive agent; and about 0.1 wt% to about 3 wt% of the binder may be mixed. By mixing in the above content ranges, cycle-life characteristics of the battery may be improved while maximizing the capacity.

The method of preparing the positive electrode may further include applying the positive electrode active material composition to the positive electrode current collector and drying the same to prepare a positive electrode active material layer on the positive electrode current collector, and then applying a zirconium-containing compound on the positive electrode active material layer to form a zirconium protective layer. The zirconium-containing compound may be, for example, zirconium oxide, lithium zirconium oxide, or a combination thereof. When the zirconium protective layer is further formed on the positive electrode active material layer, a performance of the all-solid-state battery may be improved by lowering an interfacial resistance between the positive electrode active material layer and the solid electrolyte layer.

### All-solid-state Battery

In an embodiment, an all-solid-state battery includes the aforementioned positive electrode, a negative electrode, and a solid electrolyte layer between the positive electrode and the negative electrode. The all-solid-state battery may be expressed as a rechargeable all-solid-state battery or a rechargeable all-solid-state lithium battery.

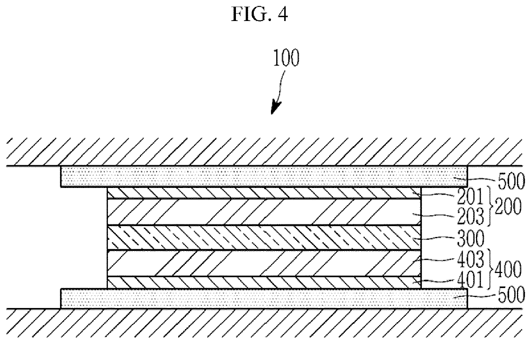

FIG. 4 is a cross-sectional view schematically illustrating an all-solid-state battery according to an embodiment. Referring to FIG. 4, the all-solid-state battery 100 may have a structure that an electrode assembly, in which a negative electrode 400 including a negative current collector 401 and a negative electrode active material layer 403, a solid electrolyte layer 300, and a positive electrode 200 including a positive electrode active material layer 203 and a positive current collector 201 are stacked, is inserted into a case such as a pouch and the like

The all-solid-state battery 100 may further include at least one elastic layer 500 on the outside of at least either one of the positive electrode 200 and the negative electrode 400. FIG. 4 shows one electrode assembly including the negative electrode 400, the solid electrolyte layer 300, and the positive electrode 200, but two or more electrode assemblies may be stacked to manufacture an all-solid-state battery.

### Negative Electrode

The negative electrode for an all-solid-state battery may include, for example, a current collector and a negative electrode active material layer on the current collector. The negative electrode active material layer may include a negative electrode active material, and may further include a binder, a conductive material, and/or a solid electrolyte.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous carbon, or a combination thereof as a carbon-based negative electrode active material. The crystalline carbon may be non-shaped, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x < 2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative electrode active material may include Sn, SnO₂, a Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof.

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or a combination thereof. The amorphous carbon precursor may be a coal-based pitch, mesophase pitch, petroleum-based pitch, coal-based oil, petroleum-based heavy oil, or a polymer resin such as a phenol resin, a furan resin, or a polyimide resin. In this case, the content of silicon may be about 10 wt% to about 50 wt% based on the total weight of the silicon-carbon composite. In addition, the content of the crystalline carbon may be about 10 wt% to about 70 wt% based on the total weight of the silicon-carbon composite, and the content of the amorphous carbon may be about 20 wt% to about 40 wt% based on the total weight of the silicon-carbon composite. In addition, a thickness of the amorphous carbon coating layer may be about 5 nm to about 100 nm.

The average particle diameter (D50) of the silicon particles may be about 10 nm to about 20µm, for example about 10 nm to about 200 nm. The silicon particles may exist in an oxidized form, and in this case, an atomic content ratio of Si:O in the silicon particles indicating a degree of oxidation may be a weight ratio of about 99:1 to about 33:67. The silicon particles may be SiOₓ particles, and in this case, the range of x in SiOₓ may be greater than about 0 and less than about 2.

Here, the average particle diameter (D50) is measured by a particle size analyzer using a laser diffraction method, and refers to a diameter of particles having a cumulative volume of 50 volume% in the particle size distribution.

The Si-based negative electrode active material or Sn-based negative electrode active material may be mixed with the carbon-based negative electrode active material. A mixing ratio of the Si-based negative electrode active material or Sn-based negative electrode active material; and a carbon-based negative electrode active material may be about 1:99 to about 90:10.

In the negative electrode active material layer, the negative electrode active material may be included in an amount of about 95 wt% to about 99 wt% based on the total weight of the negative electrode active material layer.

In an embodiment, the negative electrode active material layer further includes a binder, and may optionally further include a conductive material. The content of the binder in the negative electrode active material layer may be about 1 wt% to about 5 wt% based on the total weight of the negative electrode active material layer. In addition, when the conductive material is further included, the negative electrode active material layer may include about 90 wt% to about 98 wt% of the negative electrode active material, about 1 wt% to about 5 wt% of the binder, and about 1 wt% to about 5 wt% of the conductive material.

The binder serves to well adhere the negative electrode active material particles to each other and also to adhere the negative electrode active material to the current collector. The binder may be a water-insoluble binder, a water-soluble binder, or a combination thereof.

Examples of the water-insoluble binder include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. As the alkali metal, Na, K or Li may be used. The amount of the thickener used may be about 0.1 parts by weight to about 3 parts by weight based on 100 parts by weight of the negative electrode active material.

The conductive material is included to provide electrode conductivity. Any electrically conductive material may be used as a conductive material unless it causes a chemical change. The conductive material may include, for example a carbon-based material such as natural graphite, artificial graphite, carbon black, acetylene black, ketjen black, carbon fiber, carbon nanofiber, carbon nanotube, and the like; a metal-based material of a metal powder or a metal fiber including copper, nickel, aluminium, silver, and the like; a conductive polymer such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal, and a combination thereof.

On the other hand, the negative electrode for an all-solid-state battery may be, for example, a precipitation-type negative electrode. The precipitation-type negative electrode may be a negative electrode which has no negative electrode active material during the assembly of a battery but in which a lithium metal and the like are precipitated during the charge of the battery and serve as a negative electrode active material.

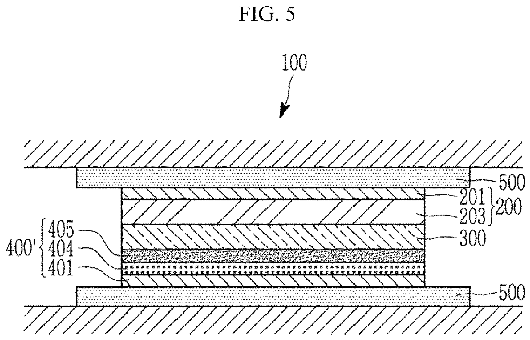

FIG. 5 is a schematic cross-sectional view of an all-solid-state battery including a precipitation-type negative electrode. Referring to FIG. 5, the precipitation-type negative electrode 400' may include the current collector 401 and a negative electrode catalyst layer 405 disposed on the current collector. The all-solid-state battery having this precipitation-type negative electrode 400' starts to be initially charged in absence of a negative electrode active material, and a lithium metal with high density and the like are precipitated between the current collector 401 and the negative electrode catalyst layer 405 during the charge and form a lithium metal layer 404, which may work as a negative electrode active material. Accordingly, the precipitation-type negative electrode 400', in the all-solid-state battery which is more than once charged, may include the current collector 401, the lithium metal layer 404 on the current collector, and the negative electrode catalyst layer 405 on the lithium metal layer 404. The lithium metal layer 404 means a layer of the lithium metal and the like precipitated during the charge of the battery and may be called to be a metal layer, a negative electrode active material layer, or the like.

The negative electrode catalyst layer 405 may include a metal and/or a carbon material which plays a role of a catalyst.

The metal may include, for example, gold, platinum, palladium, silicon silver, aluminium, bismuth, tin, zinc, or a combination thereof and may be composed of one selected therefrom or an alloy of more than one. The metal may have an average particle diameter (D50) of less than or equal to about 4 µm, for example, about 10 nm to about 4 µm.

The carbon material may be, for example, crystalline carbon, non-graphitic carbon, or a combination thereof. The crystalline carbon may be, for example, at least one selected from natural graphite, artificial graphite, mesophase carbon microbead, and a combination thereof. The non-graphite-based carbon may be at least one selected from carbon black, activated carbon, acetylene black, denka black, ketjen black, and a combination thereof.

When the negative electrode catalyst layer 405 includes the metal and the carbon material, the metal and the carbon material may be, for example, mixed in a weight ratio of about 1:10 to about 2:1. Here, the precipitation of the lithium metal may be effectively promoted and improve characteristics of the all-solid-state battery. The negative electrode catalyst layer 405 may include, for example, a carbon material on which a catalyst metal is supported or a mixture of metal particles and carbon material particles.

The negative electrode catalyst layer 405 may further include a binder, and the binder may be a conductive binder. In addition, the negative electrode catalyst layer 405 may further include general additives such as a filler, a dispersing agent, an ion conductive agent, and the like. In an embodiment, the negative electrode catalyst layer may not include a negative electrode active material.

The negative electrode catalyst layer 405 may have, for example, a thickness of about 1 µm to about 20 µm.

The precipitation-type negative electrode 400' may further include a thin film, for example, on the surface of the current collector, that is, between the current collector and the negative electrode catalyst layer. The thin film may include an element capable of forming an alloy with lithium. The element capable of forming an alloy with lithium may be, for example, gold, silver, zinc, tin, indium, silicon, aluminium, bismuth, and the like, which may be used alone or an alloy of more than one. The thin film may further planarize a precipitation shape of the lithium metal layer 404 and much improve characteristics of the all-solid-state battery. The thin film may be formed, for example, in a vacuum deposition method, a sputtering method, a plating method, and the like. The thin film may have, for example, a thickness of about 1 nm to about 500 nm.

### Solid Electrolyte Layer

The solid electrolyte layer 300 includes a solid electrolyte, and the solid electrolyte may be an inorganic solid electrolyte such as a sulfide-based solid electrolyte or an oxide-based solid electrolyte, or a solid polymer electrolyte. Since the description of the type of the solid electrolyte is the same as described above, it will be omitted.

For example, the solid electrolyte included in the solid electrolyte layer 300 and an solid electrolyte included in the positive electrode 200 may include the same compound, for example, may be the same sulfide-based solid electrolyte, for example, the same argyrodite-type sulfide-based solid electrolyte. Herein, the all-solid-state battery may exhibit improved overall performance and be stably operated.

In addition, the solid electrolyte included in the positive electrode 200 may have a smaller average particle diameter (D50) than that of the solid electrolyte included in the solid electrolyte layer 300. Herein, energy density of the all-solid-state battery may be maximized, and overall performance thereof may be improved by increasing mobility of lithium ions. For example, the solid electrolyte included in the positive electrode 200 may have an average particle diameter (D50) of about 0.5 µm to about 2.0 µm, or about 0.5 µm to about 1.5 µm, and the solid electrolyte of the solid electrolyte layer 300 may have an average particle diameter (D50) of about 2.1 µm to about 5.0 µm, or about 2.1 µm to about 4.0 µm, or about 2.5 µm to about 3.5 µm. When these particle diameter ranges are satisfied, while energy density of the all-solid-state battery is maximized, since lithium ions are easily transferred, resistance may be suppressed, thereby improving overall performance of the all-solid-state battery. Herein, the average particle diameter (D50) of the solid electrolyte may be measured through a particle size analyzer using a laser diffraction method. Or, the average particle diameter (D50) may be calculated by randomly selecting about 30 particles from a microscope photograph taken with a scanning electron microscope and the like to measure the particle sizes and obtain a particle size distribution therefrom.

The solid electrolyte layer may further include a binder in addition to the solid electrolyte. Herein, the binder may include a styrene butadiene rubber, polytetrafluoroethylene, polyvinylidene fluoride, polyethylene, an acrylate-based polymer, or a combination thereof, but is not limited thereto. The acrylate-based polymer may be, for example, butyl acrylate, polyacrylate, polymethacrylate, or a combination thereof.

The solid electrolyte layer may be formed by adding a solid electrolyte to a binder solution, coating it on a base film, and drying the resultant. The solvent of the binder solution may be isobutyryl isobutyrate, xylene, toluene, benzene, hexane, or a combination thereof. Since a forming process of the solid electrolyte layer is well known in the art, a detailed description thereof will be omitted.

A thickness of the solid electrolyte layer may be, for example, about 10 µm to about 150 µm.

The solid electrolyte layer may further include an alkali metal salt and/or an ionic liquid and/or a conductive polymer.

The alkali metal salt may be, for example, a lithium salt. A content of the lithium salt in the solid electrolyte layer may be greater than or equal to about 1 M, for example, about 1 M to about 4 M. In this case, the lithium salt may improve ionic conductivity by improving lithium ion mobility of the solid electrolyte layer.

The lithium salt may include, for example, LiSCN, LiN(CN)₂, Li(CF₃SO₂)₃C, LiC₄F₉SO₃, LiN(SO₂CF₂CF₃)₂, LiCI, LiF, LiBr, Lil, LiB(C₂O₄)₂, LiBF₄, LiBF₃(C₂F₅), lithium bis(oxalato) borate (LiBOB), lithium oxalyldifluoroborate (LIODFB), lithium difluoro(oxalato) borate (LiDFOB), lithium bis(trifluoromethanesulfonyl)imide (LiTFSI, LiN(SO₂CF₃)₂), lithium bis(fluorosulfonyl)imide, LiFSI, LiN(SO₂F)₂), LiCF₃SO₃, LiAsF₆, LiSbF₆, LiClO₄, or a mixture thereof.

In addition, the lithium salt may be an imide-based salt, for example, the imide-based lithium salt may be lithium bis(trifluoromethane sulfonyl) imide (LiTFSI, LiN(SO₂CF₃)₂), and lithium bis(fluorosulfonyl)imide (LiFSI, LiN(SO₂F)₂). The lithium salt may maintain or improve ionic conductivity by appropriately maintaining chemical reactivity with the ionic liquid.

The ionic liquid has a melting point below room temperature, so it is in a liquid state at room temperature and refers to a salt or room temperature molten salt composed of ions alone.

The ionic liquid may be a compound including at least one cation selected from a) ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based, and a mixture thereof, and at least one anion selected from BF₄-, PF₆-, AsF₆-, SbF₆-, AlCl₄-, HSO₄-, ClO₄-, CH₃SO₃-, CF₃CO₂-, CI-, Br-, I-, BF₄-, SO₄-, CF₃SO₃-, (FSO₂)₂N-, (C₂F₅SO₂)2N-, (C₂F₅SO₂)(CF₃SO₂)N-, and (CF₃SO₂)₂N-.

The ionic liquid may be, for example, one or more selected from N-methyl-N-propylpyrrolidinium bis(trifluoromethanesulfonyl)imide, N-butyl-N-methylpyrrolidium bis(3-trifluoromethylsulfonyl) imide, 1-butyl-3-methylimidazolium bis(trifluoromethylsulfonyl)amide, and 1-ethyl-3-methylimidazolium bis(trifluoromethylsulfonyl)amide.

A weight ratio of the solid electrolyte and the ionic liquid in the solid electrolyte layer may be about 0.1:99.9 to about 90:10, for example, about 10:90 to about 90:10, about 20:80 to about 90:10, about 30:70 to about 90:10, about 40:60 to about 90:10, or about 50:50 to about 90:10. The solid electrolyte layer satisfying the above ranges may maintain or improve ionic conductivity by improving the electrochemical contact area with the electrode. Accordingly, the energy density, discharge capacity, rate capability, etc. of the all-solid-state battery may be improved.

The all-solid-state battery may be a unit cell having a structure of a positive electrode/solid electrolyte layer/negative electrode, a bicell having a structure of positive electrode/solid electrolyte layer/negative electrode/solid electrolyte layer/positive electrode, or a stacked battery in which the structure of the unit cell is repeated.

The shape of the all-solid-state battery is not particularly limited, and may be, for example, a coin type, a button type, a sheet type, a stack type, a cylindrical shape, a flat type, and the like. In addition, the all-solid-state battery may be applied to a large-sized battery used in an electric vehicle or the like. For example, the all-solid-state battery may also be used in a hybrid vehicle such as a plug-in hybrid electric vehicle (PHEV). In addition, it may be used in a field requiring a large amount of power storage, and may be used, for example, in an electric bicycle or a power tool.

Hereinafter, examples of the present invention and comparative examples are described. It is to be understood, however, that the examples are for the purpose of illustration and are not to be construed as limiting the present invention.

### Example

### 1. Preparation of Positive Electrode Active Material

### (1) Preparation of First Positive Electrode Active Material Precursor

A nickel-based composite hydroxide (Ni_{0.945}Co_{0.04}Al_{0.015}(OH)₂), which is a precursor of the first positive electrode active material, was synthesized through a co-precipitation method, which will be described later. Nickel sulfate (NiSO₄·6H₂O), cobalt sulfate (CoSO₄·7H₂O), and sodium aluminium sulfate (NaAl(SO₄)₂·12H₂O) as metal raw materials were dissolved in distilled water as a solvent in a molar ratio of 94.5:4:1.5 to prepare a mixed solution. In addition, aqueous ammonia (NH₄OH) and sodium hydroxide (NaOH) as a precipitating agent were prepared for the formation of a complex compound.

### [First step: 2.5 kW/m³, NH₄OH 0.40M, pH 10.5 to 11.5, and reaction time of 6 hours]

First, ammonia water having a concentration of 0.40 M was put in a reactor. While metal raw materials and a complexing agent (NH₄OH) were added thereto respectively at 85 ml/min and 10 ml/min at 50 °C under a stirring power of 2.5 kW/ m³, a reaction was started.

While NaOH was added thereto to maintain pH, the reaction was performed for 6 hours. As a result of the reaction, it was confirmed that the average sizes of the obtained core particles were in the range of about 6.5 µm to 7.5 µm, and the second step was performed as follows.

### [Second step: 2.0 kW/ m³, NH₄OH 0.45M, pH 10.5 to 11.5, and reaction time of 18 hours]

The metal raw materials and the complexing agent were added thereto respectively at 107 ml/min and 15 ml/min, while the reaction temperature was maintained at 50 °C, so that a concentration of the complexing agent was adjusted to be 0.45 M. While adding NaOH thereto in order to maintain pH, the reaction was performed for 18 hours. At this time, the stirring power was lowered to 2.0 kW/ m³, which was lower than the first step, and the reaction proceeded. By performing this reaction, it was confirmed that the average sizes of the product particles containing the obtained core and intermediate layer were 11.5 µm to 12 µm, and the third step was performed as follows.

### [Third step: 1.0 kW/ m³, NH₄OH 0.45M, pH 10.5 to 11.5, and reaction time of 10 hours]

While maintaining the reaction temperature of 50 °C, the metal raw material and the complexing agent were added at the rates of 142 ml/min and 19 ml/min, respectively, so that the concentration of the complexing agent was maintained the same as in the second step. While adding NaOH thereto in order to maintain pH, the reaction was performed for 10 hours. At this time, the stirring power was lowered to 1.0 kW/m³, which was lower than in the second step, and the reaction proceeded.

### [Post-process]

After washing the resultant, it was dried with hot air at about 150 °C for 24 hours to obtain nickel-based hydroxide (Ni_{0.945}Co_{0.04}Al_{0.015}(OH)₂), which is a first positive electrode active material precursor.

### (2) Preparation of Second Positive Electrode Active Material

A nickel-based composite hydroxide (Ni₀₉₄Co_{0.04}Al_{0.01}Mn_{0.01}(OH)₂), which is a second positive electrode active material precursor, was synthesized through the co-precipitation method. As metal raw materials, nickel sulfate (NiSO₄·6H₂O), cobalt sulfate (CoSO₄·7H₂O), sodium aluminium sulfate (NaAl(SO₄)₂·12H₂O), and manganese sulfate (MnSO₄·H₂O) were mixed in a molar ratio of 94:4:1:1 and dissolved in distilled water as a solvent to prepare a mixed solution. Thereafter, the synthesis was the same as the preparation of the first positive electrode active material precursor.

The nickel-based composite hydroxide prepared in the aforementioned method was mixed with hydroxide lithium in a mole ratio of 1:1 and then, heat-treated at 850 °C under an oxygen atmosphere. The heat-treated resultant was pulverized to have an average particle diameter (D50) of about 3 µm with an air flow crusher, obtaining a second positive electrode active material of single particle lithium nickel-based composite oxide (LiNi_{0.94}Co_{0.04}Al_{0.01}Mn_{0.01}O₂).

### (3) Preparation of Mixed Positive Electrode Active Material

The first positive electrode active material precursor and the second positive electrode active material were mixed in a weight ratio of 7:3, and 100 parts by mole of LiOH based on 100 parts by mole of the first positive electrode active material precursor was added thereto and then, heat-treated at 700 °C for 7 hours under an oxygen atmosphere, obtaining a positive electrode active material. The first positive electrode active material precursor and LiOH reacted, synthesizing a first positive electrode active material of lithium nickel-based composite oxide, and the second positive electrode active material was reheat-treated.

In the obtained final positive electrode active material, the first positive electrode active material included lithium nickel-based composite oxide (LiNi_{0.945}Co_{0.04}Al_{0.015}O₂) and was in the form of a secondary particle with an average particle diameter (D50) of 14 µm, wherein the inner portion of the secondary particle had an irregular porous structure, and an outer portion of the secondary particle had a structure in which at least a portion of the primary particles were radially arranged, but the second positive electrode active material maintained a single particle structure.

### (4) Buffer Layer Coating

The prepared first and second positive electrode active materials were coated with lithium zirconium oxide (Li₂O-ZrO₂) on the surface as follows. 2-propanol from which moisture was removed, a methanol solution containing 10% lithium methoxide, and zirconium isopropoxide were mixed in a molecular ratio (molar ratio) of 200:2:1, and the positive electrode active material was added thereto and dispersed therein. While ultrasonic waves were irradiated to prevent aggregation of the active material particles, the propanol was evaporated under vacuum at 50 °C. The resulting material was filtered and heat-treated at 350 °C under an air atmosphere for 1 hour, obtaining a positive electrode active material coated with Li₂O-ZrO₂.

### 2. Preparation of Positive Electrode

85 wt% of the positive electrode active material, 13.5 wt% of an argyrodite-type solid electrolyte (Li₆PS₅Cl, D50 = 1 µm), 1.0 wt% of a polyvinylidene fluoride binder, 0.4 wt% of a carbon nanotube conductive material, and 0.1 wt% of a dispersing agent were mixed with an isobutyryl isobutyrate (IBIB) solvent, preparing a positive electrode active material composition. This composition was coated on a positive electrode current collector and dried, preparing a positive electrode.

### 3. Preparation of All-solid-state Battery Cells

### (1) Preparation of Solid Electrolyte Layer

An isobutyryl isobutyrate solvent including an acryl-based binder was added to the argyrodite-type solid electrolyte (Li₆PS₅Cl, D50 = 3 µm) and mixed therewith. Herein, the solvent was added thereto, while mixed, to secure appropriate viscosity, preparing slurry. The slurry was coated on a releasing film and dried at room temperature, forming a solid electrolyte layer.

### (2) Preparation of Negative Electrode

A negative electrode catalyst layer composition was prepared by mixing carbon black with a primary particle diameter of about 30 nm and silver (Ag) with an average particle diameter (D50) of about 60 nm in a weight ratio of 3:1 to prepare a catalyst and adding 0.25 g of the catalyst to 2 g of an NMP solution including 7 wt% of a polyvinylidene fluoride binder. This composition was coated on a negative current collector and dried, preparing a precipitation-type negative electrode having a negative electrode catalyst layer on the current collector.

### (3) Preparation of Final All-solid-state Battery Cell

The positive electrode, the negative electrode, and the solid electrolyte layer were cut, and then, the solid electrolyte layer was laminated on the positive electrode, and the negative electrode was laminated thereon. The laminated product was sealed into a pouch form and then, pressed with a warm Isostatic press (WIP) at 500 MPa for 30 minutes at a high temperature of 80 °C, manufacturing an all-solid-state battery cell.

### Comparative Example 1

A positive electrode and an all-solid-state battery cell were manufactured in the same manner as in the Example except that the positive electrode active material was prepared in the following method. In the final positive electrode active material according to Comparative Example 1, the first positive electrode active material includes lithium nickel-based composite oxide and has a form of non-radiative secondary particle, and the second positive electrode active material is not a single particle structure but a non-radiative secondary particle.

### 1. Preparation of Positive Electrode Active Material According to Comparative Example 1

### (1) Preparation of First Positive Electrode Active Material according to Comparative Example 1

As metal raw materials, nickel sulfate (NiSO₄·6H₂O), cobalt sulfate (CoSO₄·7H₂O), and sodium aluminium sulfate (NaAl(SO₄)₂·12H₂O) in a mole ratio of 94.5:4:1.5 were dissolved in a solvent of distilled water to prepare a metal raw material mixed solution, and ammonia water (NH₄OH) and sodium hydroxide (NaOH) as a precipitant were prepared for forming a complex compound.

After adding the dilute ammonia water solution to the continuous reactor, the metal raw material mixed solution was continuously added, and sodium hydroxide was added to maintain the pH inside the reactor. After slowly conducting a reaction for about 80 hours, when the reaction was stabilized, a product overflown therefrom was collected and then, washed and dried, obtaining a final precursor. Accordingly, nickel-based composite hydroxide (Ni_{0.945}Co_{0.04}Al_{0.015}(OH)₂) in the form of secondary particles in which primary particles are not radially arranged was prepared.

100 parts by mole of the nickel-based composite hydroxide was mixed with 100 parts by mole of LiOH and then, heated up to 730 °C under an oxygen atmosphere for 5 hours and heat-treated for 7 hours, preparing a first positive electrode active material of non-radiative nickel-based composite oxide (LiNi_{0.945}Co_{0.04}Al_{0.015}O₂).

### (2) Preparation of Second Positive Electrode Active Material according to Comparative Example 1

Nickel-based composite hydroxide (Ni_{0.945}Co_{0.04}Al_{0.015}(OH)₂) having an average particle diameter (D50) reduced to 4 µm from 14 µm was prepared by maintaining pH inside the reactor to be higher in the preparation of the first positive electrode active material precursor according to Comparative Example 1. A product overflown therefrom was collected and then, washed and dried, obtaining a final precursor.

The obtained nickel composite hydroxide and LiOH were mixed in a molar ratio of 1:0.98 and heat-treated at 700 °C under an oxygen atmosphere for 8 hours to prepare a second positive electrode active material (LiNi_{0.945}Co_{0.04}Al_{0.015}O₂) in a form of secondary particles in which a plurality of primary particles are aggregated, and an average particle diameter (D50) of the secondary particles is 4 µm.

### (3) Preparation of Final Positive Electrode Active Material

A final positive electrode active material was prepared by mixing the prepared first and second positive electrode active materials in a weight ratio of 7:3 and then, performing the same Li₂O-ZrO₂ coating as (4) the buffer layer coating process of the Example.

Thereafter, a positive electrode and an all-solid-state battery cell were prepared in the same manner as in the Example.

### Comparative Example 2

In the positive electrode active material according to Comparative Example 2, the first positive electrode active material is in the form of radial secondary particles, and the second positive electrode active material is also in the form of radial secondary particles.

### (1) Preparation of First Positive Electrode Active Material according to Comparative Example 2

The first positive electrode active material precursor (Ni_{0.945}Co_{0.04}Al_{0.015}(OH)₂) prepared in the Example and LiOH were mixed in a molar ratio of 1:1 and heat-treated at 700 °C in an oxygen atmosphere for 8 hours to prepare a first positive electrode active material (LiNi_{0.945}Co_{0.04}Al_{0.015}O₂) in a form of secondary particles in which at least a portion of primary particles are radially arranged and an average particle diameter (D50) of the secondary particle is 14 µm.

### (2) Preparation of Second Positive Electrode Active Material according to Comparative Example 2

A nickel-based composite hydroxide (Ni_{0.94}Co_{0.04}Al_{0.01}Mn_{0.01}(OH)₂), which is a second positive electrode active material precursor, was synthesized through the co-precipitation method. As metal raw materials, nickel sulfate (NiSO₄·6H₂O), cobalt sulfate (CoSO₄·7H₂O), sodium aluminium sulfate (NaAl(SO₄)₂·12H₂O), and manganese sulfate (MnSO₄·H₂O) were mixed in a molar ratio of 94:4:1:1 and dissolved in distilled water as a solvent to prepare a mixed solution.

### [First step: 4.5 kW/m³, NH₄OH 0.25 M, pH 11.8 to 12.0, and reaction time of 6 hours]

First, ammonia water having a concentration of 0.25 M was put in a reactor. While the metal raw materials and a complex agent were added thereto respectively at 107 ml/min and 25 ml/min at 50 °C under a stirring power of 4.5 kW/m³, a reaction was started. While NaOH was added thereto to maintain pH, the reaction was performed for 6 hours, and after confirming that the particle size continued to decrease, the second step was performed as follows.

### [Second step: 3.5 kW/m³, NH₄OH 0.30 M, pH 11.8 to 12.0, and reaction time of 16 hours]

The metal raw materials and the complex agent were added thereto respectively at 142 ml/min and 33 ml/min, while the reaction temperature was maintained at 50 °C, so that the complex agent maintained a concentration of 0.30 M.

While adding NaOH thereto in order to maintain pH, the reaction is performed for 16 hours. At this time, the stirring power was lowered to 3.5 kW/m³, which was lower than the first step, and the reaction proceeded. After confirming that the obtained product containing a core and a surface layer had an average size of 3.5 µm to 3.8 µm, the reaction was terminated.

### [Post-process]

The obtained resulting material was washed and then, dried with hot air at about 150 °C for 24 hours to obtain a nickel-based hydroxide Ni_{0.94}Co_{0.04}Al_{0.01}Mn_{0.01}(OH)₂. This and LiOH were mixed in a molar ratio of 1:0.99 and heat-treated in an oxygen atmosphere at 700 °C for 8 hours to obtain a lithium nickel-based composite oxide (LiNi_{0.94}Co_{0.04}Al_{0.1}Mn_{0.01}O₂), aggregation was eliminated to prepare a second positive electrode active material having a size of 4 µm.

### (3) Preparation of Final Positive Electrode Active Material

A final positive electrode active material was prepared by mixing the prepared first and second positive electrode active materials in a weight ratio of 7:3 and performing the same Li₂O-ZrO₂ coating as (4) the buffer layer coating process of the Example.

Thereafter, a positive electrode and an all-solid-state battery cell were prepared in the same manner as in the Example.

### Comparative Example 3

A positive electrode active material of Comparative Example 3 was prepared by preparing the first positive electrode active material (LiNi_{0.945}Co_{0.04}Mn_{0.015}O₂) in the form of non-radial secondary particles according to Comparative Example 1 and the second positive electrode active material (LiNi_{0.94}Co_{0.04}Al_{0.01}Mn_{0.01}O₂) of single particles according to the Example, mixing them in a weight ratio of 7:3 and conducting the same Li₂O-ZrO₂ coating as (4) the buffer coating process of the Example.

Thereafter, a positive electrode and an all-solid-state battery cell were prepared in the same manner as in the Example.

### Evaluation Example 1: Evaluation of Pellet density (PD)

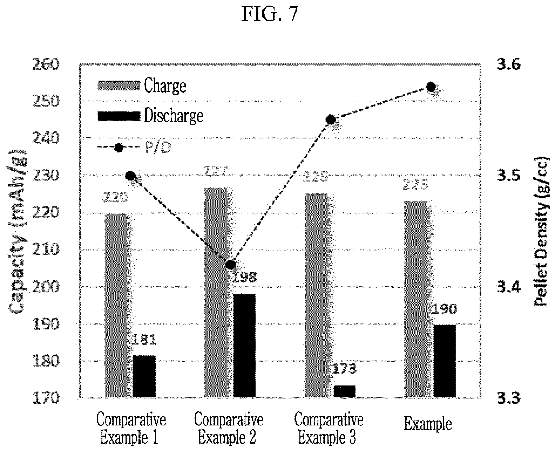

3 g of each positive electrode active material according to the Example and Comparative Examples 1 to 3 were put in a pellet-manufacturing mold and maintained at 3.3 tons for 30 seconds and then, measured with respect to density from a pellet thickness and a diameter of the mold. The measurements are shown in FIG. 7.

Referring to FIG. 7, Comparative Example 3 and the Example, to which small single particles are applied, as the second positive electrode active material, exhibit high pellet density. This increase in pellet density increases a mixture density which shows how much per unit area a positive electrode can be applied to a positive electrode plate, increasing energy density of a finished battery cell.

### Evaluation Example 2: Evaluation of Initial Capacity

The all-solid-state battery cells according to the Example and Comparative Examples 1 to 3 were charged up to an upper limit voltage of 4.25 V at a constant current of 0.1 C and discharged down to a discharge cut-off voltage of 2.5 V at 0.1 C at 45 °C and then, measured with respect to initial discharge capacity, and the results are shown in FIG. 7.

Referring to FIG. 7, the Example and Comparative Example 2, to which large radial particles advantageously designed in terms of kinetics are applied, exhibit high initial capacity.

### Evaluation Example 3: Evaluation of Volume Capacity

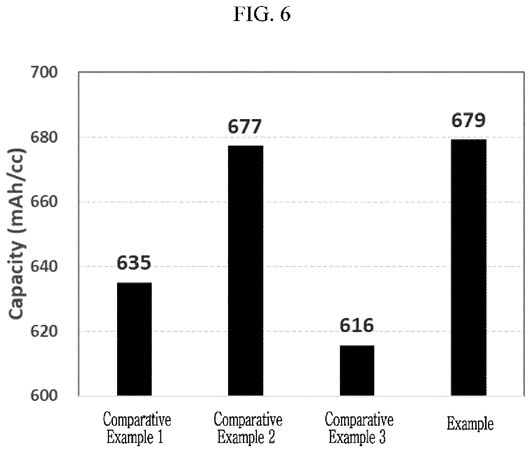

Discharge capacity, the black bar graph of FIG. 7, was multiplied with pellet density, the dotted line graph, to calculate volume capacity, which is shown in FIG. 6.

In Comparative Example 2, to which the radial large particles as a first positive electrode active material is applied, volume capacity is improved, but in Comparative Example 3 to which non-radial large particles are applied as a first positive electrode active material and single small particles are applied as a second positive electrode active material, volume capacity is reduced. Comparative Example 3 is understood to exhibit improved pellet density but significantly reduced discharge capacity and thus deteriorated volume capacity

However, the Example, to which radial large particles as a first positive electrode active material and single small particles as a second positive electrode active material are simultaneously applied, exhibits improved volume capacity, even though the single particles are applied.

### Evaluation Example 4: Evaluation of Constant Current

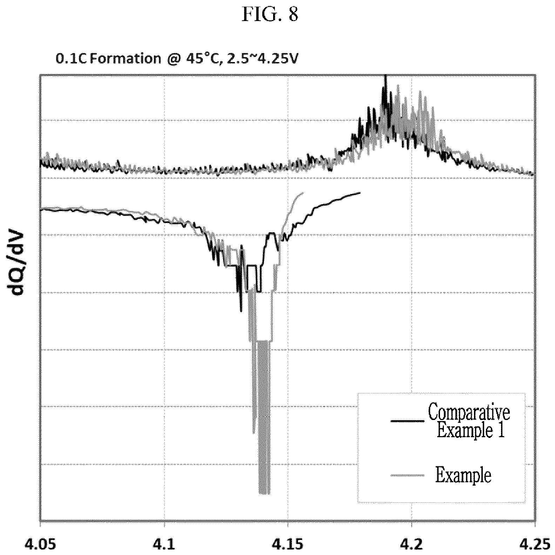

FIG. 8 is a graph showing dQ/dV according to a voltage in a high voltage region (4.05 V to 4.25 V) by performing initial charge and discharge of the cells of the Example and Comparative Example 1 in the same manner as in Evaluation Example 2. In the lower discharge graph of FIG. 8, the Example exhibits a larger integral value and thus kinetic characteristics at a higher potential than Comparative Example 1.

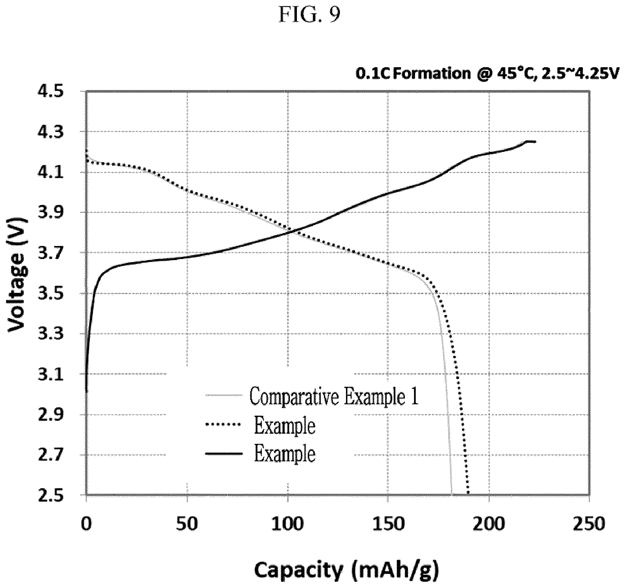

FIG. 9 is a graph showing capacity change according to a voltage, while initial charge and discharge for the battery cells of the Example and Comparative Example 1 are conducted in the same manner as in Evaluation Example 2. Referring to FIG. 9, the Example exhibits improved kinetic characteristics that lithium easily moves at the discharge end, that is, less than or equal to 3.6 V, compared with Comparative Example 1.

### Evaluation Example 5: Evaluation of Cycle-life

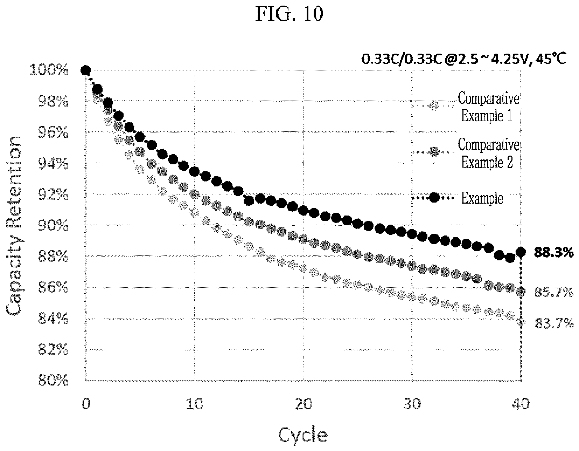

The all-solid-state battery cells of the Example and Comparative Examples 1 and 2 were initially charged and discharged in the same manner as in Evaluation Example 2 and then, 40 times repetitively charged and discharged at 0.33 C within a voltage range of 2.5 V to 4.25 V at 45 °C and evaluated with respect to cycle-life characteristics, and the results are shown in FIG. 10.

Referring to FIG. 10, the all-solid-state battery cell of the Example exhibits capacity retention of 88% or more at the 40 cycles and thus improved cycle-life characteristics, compared with Comparative Examples 1 and 2. The Example exhibits increased pellet density, compared with Comparative Example 2 and in addition, improved energy density and cycle-life characteristics of the all-solid-state battery cell.

As a result, the positive electrode of the Example turns out to be an advantageous design in terms of energy density, initial capacity, initial efficiency, and cycle-life characteristics, compared with Comparative Examples 1 to 3.

Although preferred embodiments have been described in detail above, the scope of the present invention is not limited thereto. In addition, it should be understood that various modifications and improvements by those skilled in the art using the basic concept defined in the claims also fall within the scope of the present invention.

### <Description of Symbols>

11: secondary particle
12: inner portion of secondary particle
13: primary particle
14: outer portion of secondary particle
100: all-solid-state battery
200: positive electrode
201: positive electrode current collector
203: positive electrode active material layer
300: solid electrolyte layer
400: negative electrode
401: negative current collector
403: negative electrode active material layer
400': precipitation-type negative electrode
404: lithium metal layer
405: negative electrode catalyst layer
500: elastic layer

The present invention can also be defined by reference to the following clauses:
Clause 1. A positive electrode for an all-solid-state battery, comprising
   a first positive electrode active material including a lithium nickel-based composite oxide and being in a form of secondary particles in which a plurality of primary particles are aggregated and at least a portion of the primary particles are radially arranged, and
   a second positive electrode active material including a lithium nickel-based composite oxide and being in a form of single particles;
   a solid electrolyte;
   a conductive agent; and
   a binder.
Clause 2. The positive electrode of claim 1, wherein
   based on the total weight of the positive electrode active material, the solid electrolyte, the conductive agent, and the binder, the positive electrode comprises:
   55 wt% to 99.7 wt% of the positive electrode active material;
   0.1 wt% to 35 wt% of the solid electrolyte;
   0.1 wt% to 5 wt% of the conductive agent; and
   0.1 wt% to 5 wt% of the binder.
Clause 3. The positive electrode of clause 1 or clause 2, wherein
   the first positive electrode active material includes a zirconium-containing coating layer on the surface of the secondary particles, and
   the second positive electrode active material includes a zirconium-containing coating layer on the surface of the single particle.
Clause 4. The positive electrode of any one of clauses 1 to 3, wherein
   the secondary particles of the first positive electrode active material include an inner portion in which primary particles and pores are irregularly arranged, and an outer portion in which at least a portion of the primary particles are radially arranged as a region surrounding the inner portion.
Clause 5. The positive electrode of clause 4, wherein:
   a radius ratio of the inner portion to a total of the secondary particles of the first positive electrode active material is 50% to 55%; and/or
   a volume ratio of the outer portion to the total of the secondary particles is less than or equal to 87%.
Clause 6. The positive electrode of any one of clauses 1 to 5, wherein
   the secondary particles of the first positive electrode active material include plate-shaped primary particles,
   at least a portion of the plate-shaped primary particles have a long axis arranged in a radial direction,
   an average length of the plate-shaped primary particles is 150 nm to 500 nm, the average thickness thereof is 100 nm to 200 nm, and a ratio of the average thickness to the average length is 1:2 to 1:5.
Clause 7. The positive electrode of any one of clauses 1 to 6, wherein
   the inner portion of the secondary particles of the first positive electrode active material includes pores having a larger size than the pores in the outer portion,
   the pore size in the inner portion of the secondary particles is 150 nm to 1 µm, and
   the pore size in the outer portion of the secondary particles is less than 150 nm.
Clause 8. The positive electrode of any one of clauses 1 to 7, wherein
   an average particle diameter (D50) of the secondary particles of the first positive electrode active material is 5 µm to 20 µm, and
   an average particle diameter (D50) of the second positive electrode active material is 0.05 µm to 8 µm.
Clause 9. The positive electrode of any one of clauses 1 to 8, wherein
   the positive electrode active material includes
   50 wt% to 90 wt% of the first positive electrode active material, and
   10 wt% to 50 wt% of the second positive electrode active material.
Clause 10. The positive electrode of any one of clauses 1 to 9, wherein
   in each of the first positive electrode active material and the second positive electrode active material, each of the lithium nickel-based composite oxide is the same as or different from each other, and is each independently represented by Chemical Formula 1:

      [Chemical Formula 1] Liₐ₁Niₓ₁M¹_{y1}M²_{1-x1-y1}O_{2-z}X_{z}
   wherein, in Chemical Formula 1, 0.9≤a1≤1.8, 0.3≤x1≤1, 0≤y1≤0.7, and 0≤z≤0.1, M¹ and M² are independently at least one element selected from Al, B, Ba, Ca, Ce, Co, Cr, Fe, Mg, Mn, Mo, Nb, Si, Sr, Ti, V, W, and Zr, and X is at least one element selected from F, P, and S.
Clause 11. The positive electrode of any one of clauses 1 to 10, wherein
   the solid electrolyte is a sulfide-based solid electrolyte, and the sulfide-based solid electrolyte includes Li₂S-P₂S₅, Li₂S-P₂S₅-LiI, Li₂S-P₂S₅-LiBr, Li₂S-P₂S₅-LiCl, Li₂S-P₂S₅-Li₂O, Li₂S-P₂S₅-Li₂O-LiI, Li₂S-P₂S₅-Li₂O-LiCl, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n is each an integer and Z is Ge, Zn, or Ga), Li₂S-GeS₂, Li₂S-SiS₂-Li₃PO₄, Li₂S-SiS₂-LiₚMO_{q} (p and q are integers and M is P, Si, Ge, B, Al, Ga, or In), or a combination thereof.
Clause 12. The positive electrode of clause 11, wherein
   the solid electrolyte is an argyrodite-type sulfide-based solid electrolyte.
Clause 13. The positive electrode of any one of clauses 1 to 12, wherein
   an average particle diameter (D50) thereof is less than or equal to 5.0 µm.
Clause 14. A method of preparing a positive electrode for an all-solid-state battery, comprising
   mixing a first positive electrode active material precursor being in a form of secondary particles in which a plurality of primary particles are aggregated and including a nickel-based composite hydroxide,
   a second positive electrode active material being in a form of single particles and including a lithium nickel-based composite oxide, and
   a lithium raw material and performing heat-treatment to prepare a positive electrode active material;
   mixing the obtained positive electrode active material, a solid electrolyte, a conductive agent, and a binder to prepare a positive electrode active material composition;
   applying the positive electrode active material composition on a positive electrode current collector and drying the same
   to obtain of the positive electrode for an all-solid-state battery of any one of clauses 1 to 13.
Clause 15. The method of clause 14, wherein
   in the preparing of the positive electrode active material, the heat-treatment is performed, at a temperature of 650 °C to 850 °C for 5 hours to 25 hours.
Clause 16. The method of clause 14 or clause 15, wherein
   after mixing the first positive electrode active material precursor, the second positive electrode active material and the lithium raw material, and performing heat treatment, the method includes mixing a zirconium raw material with the obtained material and performing reheat-treatment.
Clause 17. The method of any one of clauses 14 to 16, wherein
   in the preparing of the positive electrode active material composition, based on the total weight of the positive electrode active material, the solid electrolyte, the conductive agent, and the binder,
   55 wt% to 99.7 wt% of the positive electrode active material;
   0.1 wt% to 35 wt% of the solid electrolyte;
   0.1 wt% to 5 wt% of the conductive agent; and
   0.1 wt% to 5 wt% of the binder are mixed.
Clause 18. An all-solid-state battery, comprising
   the positive electrode of any one of clauses 1 to 13,
   a negative electrode, and
   a solid electrolyte layer between the positive electrode and the negative electrode.
Clause 19. The all-solid-state battery of clause 18, wherein
   the negative electrode includes a current collector and a negative electrode active material layer or a negative electrode catalyst layer on the current collector.
Clause 20. The all-solid-state battery of clause 18, wherein
   the negative electrode includes a current collector and a negative electrode catalyst layer on the current collector, and
   the negative electrode includes a lithium metal layer formed during initial charging between the current collector and the negative electrode catalyst layer.
Clause 21. The all-solid-state battery of any one of clauses 18 to 20, wherein
   a solid electrolyte included in the positive electrode and a solid electrolyte included in the solid electrolyte layer include the same compound.
Clause 22. The all-solid-state battery of any one of clauses 18 to 21, wherein
   a solid electrolyte included in the positive electrode and a solid electrolyte included in the solid electrolyte layer are both an argyrodite-type sulfide-based solid electrolyte.
Clause 23. The all-solid-state battery of any one of clauses 18 to 22, wherein
   an average particle diameter (D50) of the solid electrolyte included in the positive electrode is smaller than an average particle diameter (D50) of the solid electrolyte included in the solid electrolyte layer.
Clause 24. The all-solid-state battery of any one of clauses 18 to 23, wherein
   an average particle diameter (D50) of the solid electrolyte included in the positive electrode and the solid electrolyte included in the solid electrolyte layer is 0.5 µm to 5.0 µm.
Clause 25. The all-solid-state battery of any one of clauses 18 to 24, wherein
   an average particle diameter (D50) of the solid electrolyte included in the positive electrode is 0.5 µm to 2.0 µm, and
   an average particle diameter (D50) of the solid electrolyte included in the solid electrolyte layer is 2.1 µm to 5.0 µm.

## Claims

1. A positive electrode for an all-solid-state battery, comprising
a first positive electrode active material including a lithium nickel-based composite oxide and being in a form of secondary particles in which a plurality of primary particles are aggregated and at least a portion of the primary particles are radially arranged, and
a second positive electrode active material including a lithium nickel-based composite oxide and being in a form of single particles;
a solid electrolyte;
a conductive agent; and
a binder.

2. The positive electrode of claim 1, wherein
based on the total weight of the positive electrode active material, the solid electrolyte, the conductive agent, and the binder, the positive electrode comprises:
55 wt% to 99.7 wt% of the positive electrode active material;
0.1 wt% to 35 wt% of the solid electrolyte;
0.1 wt% to 5 wt% of the conductive agent; and
0.1 wt% to 5 wt% of the binder.

3. The positive electrode of claim 1 or claim 2, wherein
the first positive electrode active material includes a zirconium-containing coating layer on the surface of the secondary particles, and
the second positive electrode active material includes a zirconium-containing coating layer on the surface of the single particle.

4. The positive electrode of any one of claims 1 to 3, wherein
the secondary particles of the first positive electrode active material include an inner portion in which primary particles and pores are irregularly arranged, and an outer portion in which at least a portion of the primary particles are radially arranged as a region surrounding the inner portion, optionally wherein:
a radius ratio of the inner portion to a total of the secondary particles of the first positive electrode active material is 50% to 55%, and/or
a volume ratio of the outer portion to the total of the secondary particles is less than or equal to 87%.

5. The positive electrode of any one of claims 1 to 4, wherein:
(i) the secondary particles of the first positive electrode active material include plate-shaped primary particles,
at least a portion of the plate-shaped primary particles have a long axis arranged in a radial direction,
an average length of the plate-shaped primary particles is 150 nm to 500 nm, the average thickness thereof is 100 nm to 200 nm, and a ratio of the average thickness to the average length is 1:2 to 1:5; and/or
(ii) the inner portion of the secondary particles of the first positive electrode active material includes pores having a larger size than the pores in the outer portion,
the pore size in the inner portion of the secondary particles is 150 nm to 1 µm, and
the pore size in the outer portion of the secondary particles is less than 150 nm; and/or
(iii) an average particle diameter (D50) of the secondary particles of the first positive electrode active material is 5 µm to 20 µm, and
an average particle diameter (D50) of the second positive electrode active material is 0.05 µm to 8 µm.

6. The positive electrode of any one of claims 1 to 5, wherein
the positive electrode active material includes
50 wt% to 90 wt% of the first positive electrode active material, and
10 wt% to 50 wt% of the second positive electrode active material.

7. The positive electrode of any one of claims 1 to 6, wherein
in each of the first positive electrode active material and the second positive electrode active material, each of the lithium nickel-based composite oxide is the same as or different from each other, and is each independently represented by Chemical Formula 1:
[Chemical Formula 1] Liₐ₁Niₓ₁M¹_{y1}M²_{1-x1-y1}O_{2-z}X_{z}
wherein, in Chemical Formula 1, 0.9≤a1≤1.8, 0.3≤x1≤1, 0≤y1≤0.7, and 0≤z≤0.1, M¹ and M² are independently at least one element selected from Al, B, Ba, Ca, Ce, Co, Cr, Fe, Mg, Mn, Mo, Nb, Si, Sr, Ti, V, W, and Zr, and X is at least one element selected from F, P, and S.

8. The positive electrode of any one of claims 1 to 7, wherein
the solid electrolyte is a sulfide-based solid electrolyte, and the sulfide-based solid electrolyte includes Li₂S-P₂S₅, Li₂S-P₂S₅-LiI, Li₂S-P₂S₅-LiBr, Li₂S-P₂S₅-LiCl, Li₂S-P₂S₅-Li₂O, Li₂S-P₂S₅-Li₂O-LiI, Li₂S-P₂S₅-Li₂O-LiCl, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n is each an integer and Z is Ge, Zn, or Ga), Li₂S-GeS₂, Li₂S-SiS₂-Li₃PO₄, Li₂S-SiS₂-LiₚMO_{q} (p and q are integers and M is P, Si, Ge, B, Al, Ga, or In), or a combination thereof, optionally wherein
the solid electrolyte is an argyrodite-type sulfide-based solid electrolyte.

9. The positive electrode of any one of claims 1 to 8, wherein
an average particle diameter (D50) thereof is less than or equal to 5.0 µm.

10. A method of preparing a positive electrode for an all-solid-state battery, comprising
mixing a first positive electrode active material precursor being in a form of secondary particles in which a plurality of primary particles are aggregated and including a nickel-based composite hydroxide,
a second positive electrode active material being in a form of single particles and including a lithium nickel-based composite oxide, and
a lithium raw material and performing heat-treatment to prepare a positive electrode active material;
mixing the obtained positive electrode active material, a solid electrolyte, a conductive agent, and a binder to prepare a positive electrode active material composition;
applying the positive electrode active material composition on a positive electrode current collector and drying the same
to obtain of the positive electrode for an all-solid-state battery of any one of claims 1 to 9.

11. The method of claim 10, wherein:
(i) in the preparing of the positive electrode active material, the heat-treatment is performed, for example, at a temperature of 650 °C to 850 °C for 5 hours to 25 hours; and/or
(ii) after mixing the first positive electrode active material precursor, the second positive electrode active material and the lithium raw material, and performing heat treatment, the method includes mixing a zirconium raw material with the obtained material and performing reheat-treatment; and/or
(iii) in the preparing of the positive electrode active material composition,
based on the total weight of the positive electrode active material, the solid electrolyte, the conductive agent, and the binder,
55 wt% to 99.7 wt% of the positive electrode active material;
0.1 wt% to 35 wt% of the solid electrolyte;
0.1 wt% to 5 wt% of the conductive agent; and
0.1 wt% to 5 wt% of the binder are mixed.

12. An all-solid-state battery, comprising
the positive electrode of any one of claims 1 to 9,
a negative electrode, and
a solid electrolyte layer between the positive electrode and the negative electrode.

13. The all-solid-state battery of claim 12, wherein:
(i) the negative electrode includes a current collector and a negative electrode active material layer or a negative electrode catalyst layer on the current collector; or
(ii) the negative electrode includes a current collector and a negative electrode catalyst layer on the current collector, and
the negative electrode includes a lithium metal layer formed during initial charging between the current collector and the negative electrode catalyst layer.

14. The all-solid-state battery of claim 12 or claim 13, wherein:
(i) a solid electrolyte included in the positive electrode and a solid electrolyte included in the solid electrolyte layer include the same compound; and/or
(ii) a solid electrolyte included in the positive electrode and a solid electrolyte included in the solid electrolyte layer are both an argyrodite-type sulfide-based solid electrolyte.

15. The all-solid-state battery of any one of claims 12 to 14, wherein
(i) an average particle diameter (D50) of the solid electrolyte included in the positive electrode is smaller than an average particle diameter (D50) of the solid electrolyte included in the solid electrolyte layer; and/or
(ii) an average particle diameter (D50) of the solid electrolyte included in the positive electrode and the solid electrolyte included in the solid electrolyte layer is 0.5 µm to 5.0 µm; and/or
(iii) an average particle diameter (D50) of the solid electrolyte included in the positive electrode is 0.5 µm to 2.0 µm, and
an average particle diameter (D50) of the solid electrolyte included in the solid electrolyte layer is 2.1 µm to 5.0 µm.
